# EUROPÄISCHE PATENTSCHRIFT

(11) **EP 0 522 339 B1**
(45) Veröffentlichungstag und Bekanntmachung des Hinweises auf die Patenterteilung: **24.03.1999**
(21) Anmeldenummer: 92110469.1
(22) Anmeldetag: 22.06.1992
(51) Int. Cl.: C09B 62/20

(54) **Formazan-Farbstoffe mit einem Diffluorpyrimidinreaktivrest**
Formazan-dyes having a difluorpyrimidine reactive rest
Colorants de type formazane ayant un reste réactif difluorpyrimidinique

(30) Priorität: 04.07.1991 DE 4122100
(43) Veröffentlichungstag der Anmeldung: 13.01.1993
(73) Patentinhaber: BAYER AG, 51368 Leverkusen (DE)
(72) Erfinder: Reddig, Wolfram, Dr., W-5060 Bergisch Gladbach 1 (DE); Herd, Karl Josef, Dr., W-5068 Odenthal-Holz (DE)

(56) Entgegenhaltungen:
- FR-A- 2 000 892

## Beschreibung

Die Erfindung betrifft Reaktivfarbstoffe mit einem Difluorpyrimidinreaktivrest.

Derartige Reaktivreste sind zwar bereits aus DOS 1 644 204 (US 3 669 951) und DOS 2 114 158 (US 4 065 446) bekannt, jedoch weisen sie zum Teil noch anwendungstechnische Probleme auf.

Weiterhin sind aus DOS 2 557 141 (US-A-4 556 706) bereits Reaktivfarbstoffe mit einem Formazanrest bekannt. Auch diese Farbstoffe sind noch verbesserungswürdig. Aus FR-A-2 000 892 sind Formazan-Reaktivfarbstoffe bekannt, die einen 2,4-Difluor-5-Chlor-pyrimidinrest oder auch einen 2,4-Difluor-pyrimidinrest aufweisen. Die vorliegende Erfindung betrifft Reaktivfarbstoffe, die als freie Säuren der allgemeinen Formel entsprechen

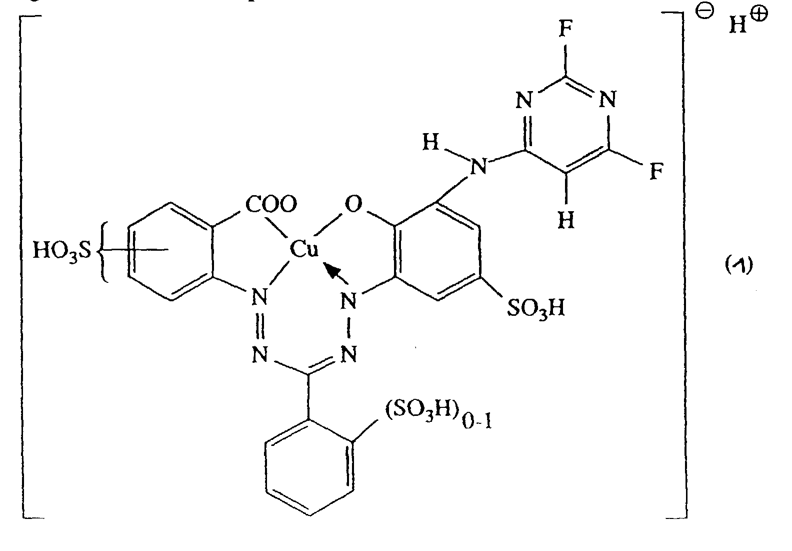

Die Herstellung der Farbstoffe (1) erfolgt durch Kondensation der Reaktivkomponente 2,4,6-Trifluorpyrimidin 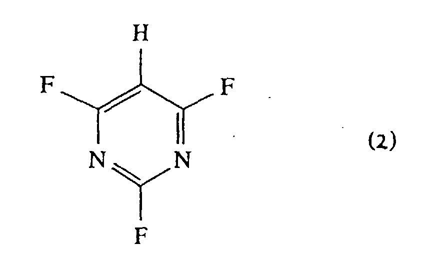 mit einer Formazanfarbbase der allgemeinen Formel

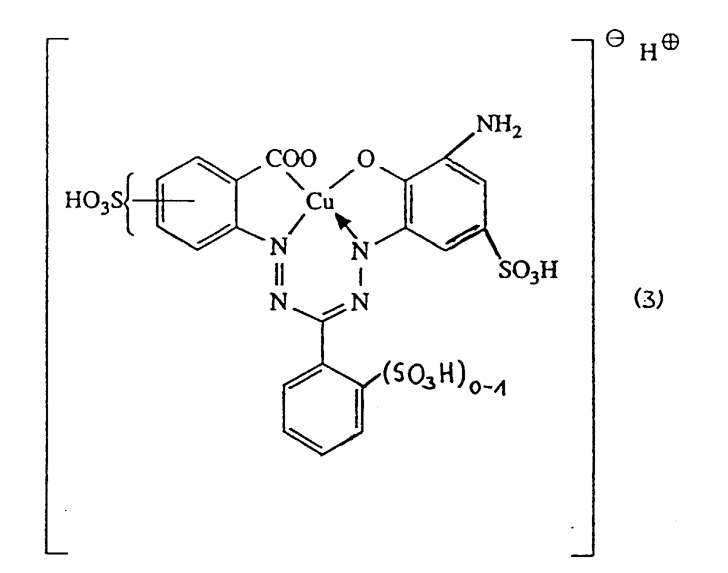

Die Kondensation mit Formazanfarbbasen der Formel (6) wird bevorzugt in wäßriger Lösung oder Suspension im pH-Bereich von 4-7 ausgeführt. Der freiwerdende Halogenwasserstoff wird vorzugsweise durch Zugabe von wäßrigem Alkali, insbesondere Lithiumhydroxid, -carbonat oder -bicarbonat neutralisiert.

Die angegebenen Formeln sind die der freien Säuren. Bei der Herstellung werden im allgemeinen die Salze erhalten, insbesondere die Alkalisalze wie Natrium-, Kalium- oder Lithiumsalze. Die Farbstoffe können auch als konzentrierte Lösungen eingesetzt werden.

Die erfindungsgemäßen Farbstoffe eignen sich hervorragend zum Färben und Bedrucken von natürlichen und synthetischen insbesondere hydroxyl- oder amidgruppenhaltigen Materialien, insbesondere solche aus Cellulose und Polyamiden. Farbstoffgemische aus Farbstoffen der Formel (1) besitzen verbesserte Löslichkeitseigenschaften.

Sowohl die Farbstoffe als auch die Farbstoffgemische sind besonders geeignet zum Färben von Cellulosematerialien in Auszieh-, Klotz-, Kaltverweil- und Kontinueverfahren, sowie im Druck.

Man erhält bei gutem Aufbauvermögen und hohen Fixierausbeuten Färbungen mit guten Allgemeinechtheiten, insbesondere Naß- und Lichtechtheiten.

### Färbevorschriften

Die in den folgenden Beispielen angegebenen Färbungen werden unter folgenden Bedingungen durchgeführt:

2 Teile des gemäß Beispiel 1 erhältlichen Farbstoffes werden in 100 ml Wasser gelöst. Die Lösung gibt man zu 1900 Teilen kaltem Wasser, fügt 60 Teile Natriumchlorid zu und geht mit 100 Teilen eines Baumwollgewebes in dieses Färbebad ein.

Man steigert die Temperatur auf 60°C, wobei nach 30 Minuten 40 Teile kalzinierte Soda und nochmals 60 Teile Natriumchlorid zugegeben werden. Man hält die Temperatur 30 Minuten auf 60°C, spült und seift dann die Färbung während 15 Minuten in einer 0,3 %igen kochenden Lösung eines ionenfreien Waschmittels, spült und trocknet. Man erhält eine blaue Färbung mit guten Echtheitseigenschaften.

### Beispiel 1

54,5 g N-(2-Carboxy4-sulfophenyl)-N'-2'-hydroxy-3'-amino-5'-sulfophenyl)-ms-phenylformazan werden in 500 ml Wasser bei 25°C verrührt und mit 36 %iger Salzsäure wird ein pH-Wert von etwa 7,5 eingestellt. Zu der so erhaltenen Suspension werden 5,3 ml 2,4,6-Trifluorpyrimidin zugegeben und die Reaktionsmischung auf 40°C aufgeheizt.

Während der Kondensation wird der pH-Wert mit verdünnter Sodalösung oder durch Zugabe von verdünnter LiOH bzw. Natronlauge bei 7,0 bis 7,5 gehalten. Nach mehrstündigem Nachrühren wird die Reaktionsmischung mit Aktivkohle und Filtrierhilfsmittel geklärt, der Farbstoff mit ca. 20 % Kochsalz ausgefällt, abgesaugt und im Vakuum bei ca. 50°C getrocknet. Der Farbstoff liegt dann als blauschwarzes Pulver vor und färbt Baumwolle in blauen Tönen an. Er besitzt folgende Konstitution: (λₘₐₓ = 614,6 nm (H₂O))

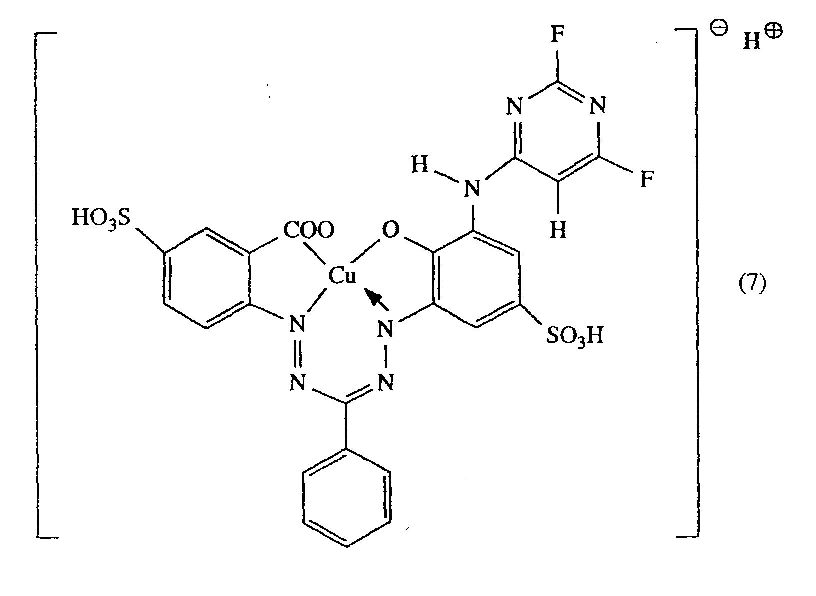

### Beispiel 2

54,5 g N-(2-Carboxy-5-sulfophenyl)-N'-(2'-hydroxy-3'-amino-5'-sulfophenyl)-ms-phenylformazan werden wie in Beispiel 1 beschrieben umgesetzt. Der Farbstoff liegt dann als blauschwarzes Pulver vor und färbt Baumwolle in blauen Tönen an. Er besitzt folgende Konstitution: (λₘₐₓ = 608,2 nm (H₂O))

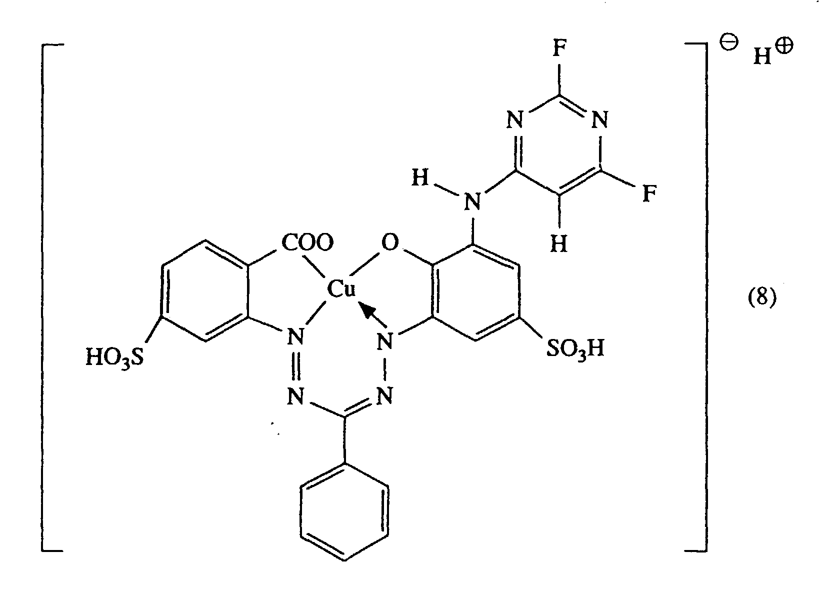

## Patentansprüche

1. Reaktivfarbstoffe, die als freie Säuren der Formel entsprechen

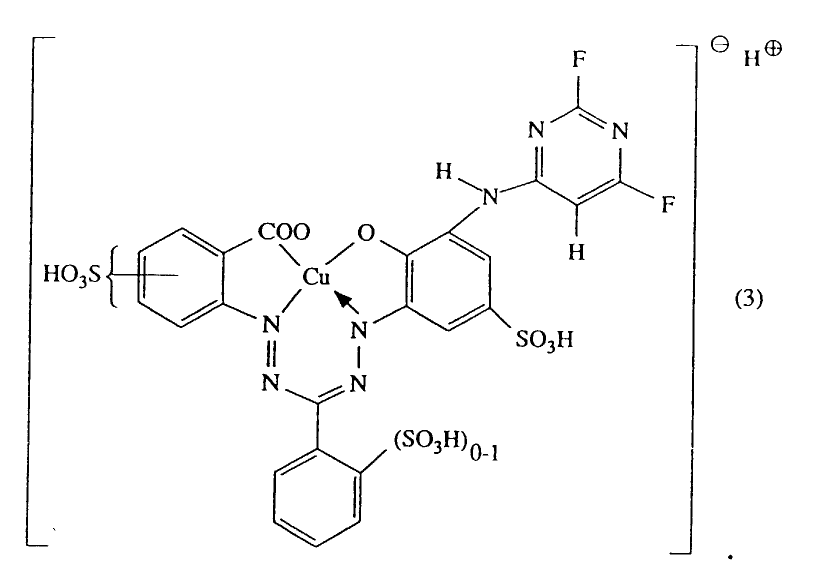

2. Reaktivfarbstoffe gemäß Anspruch 1, dadurch gekennzeichnet, daß sie als Natrium-, Kalium- oder Lithium-Salz vorliegen.

3. Verfahren zum Herstellen von Reaktivfarbstoffen gemäß Anspruch 1, dadurch gekennzeichnet daß man eine Verbindung folgender Formel 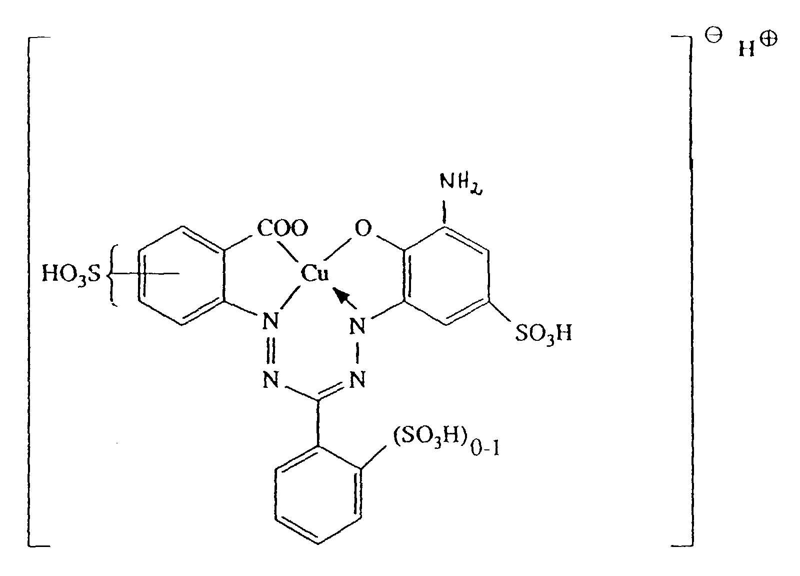 mit 2,4,6-Trifluorpyrimidin folgender Formel 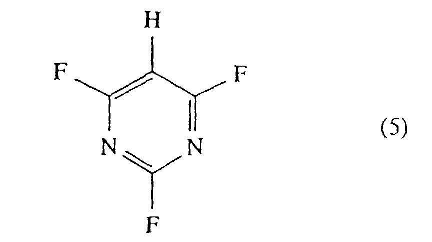 in Lösung oder Suspension umsetzt.

4. Verfahren zum Färben oder Bedrucken von Materialien mit einem Reaktivfarbstoff, dadurch gekennzeichnet, daß man einen Farbstoff gemäß Anspruch 1 verwendet.

## Claims

1. Reactive dyestuffs which, in the form of the free acids, have the formula

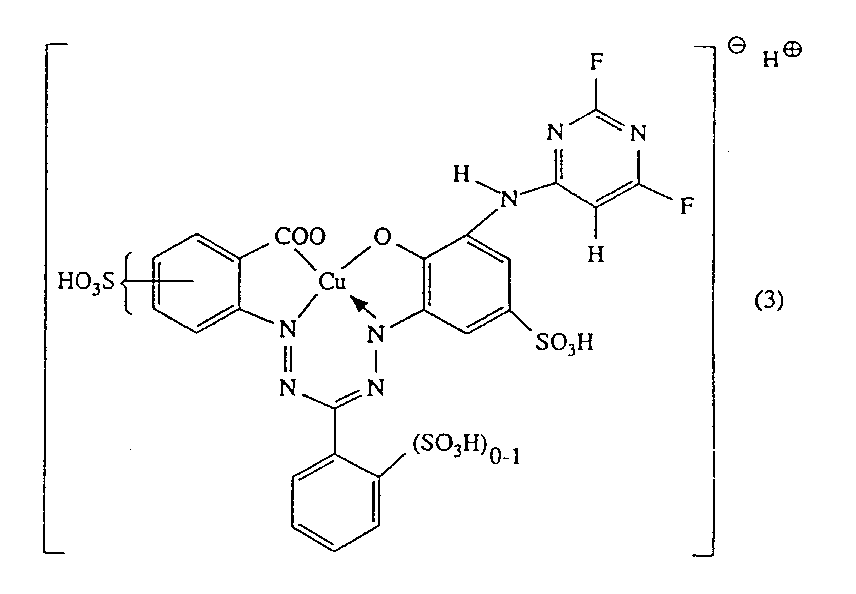

2. Reactive dyestuffs according to Claim 1, characterised in that they are present in the form of the sodium salt, potassium salt or lithium salt.

3. Process for the preparation of reactive dyestuffs according to Claim 1, characterised in that a compound of the formula below 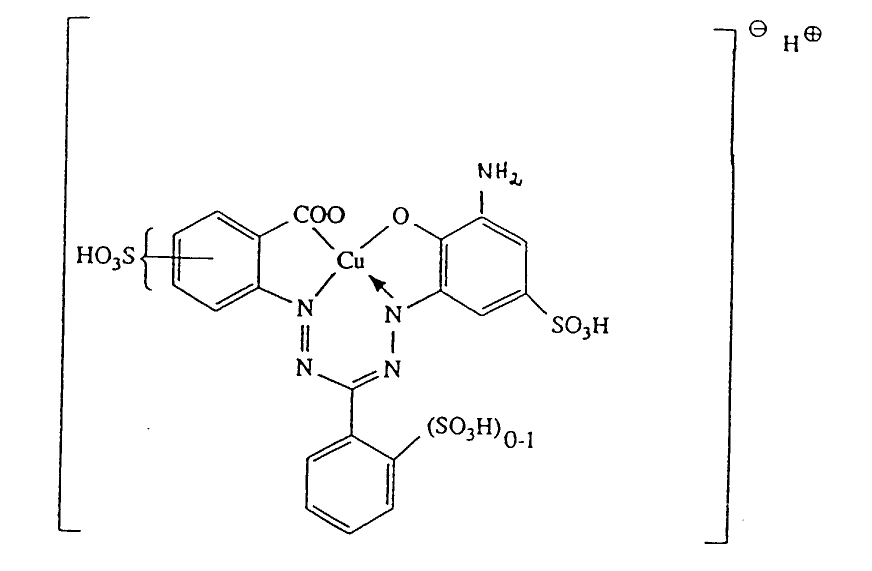 is reacted with 2,4,6-trifluoropyrimidine of the formula below 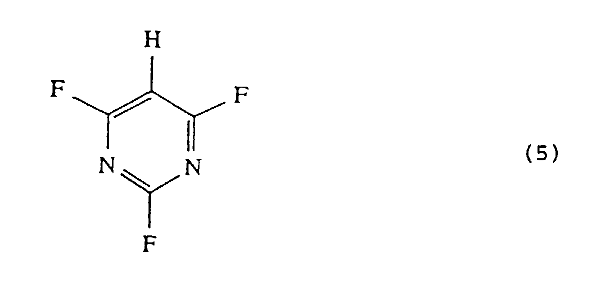 in solution or suspension.

4. Process for the dyeing or printing of materials using a reactive dyestuff, characterised in that a dyestuff according to Claim 1 is used.

## Revendications

1. Colorants réactifs qui correspondent comme acides libres à la formule

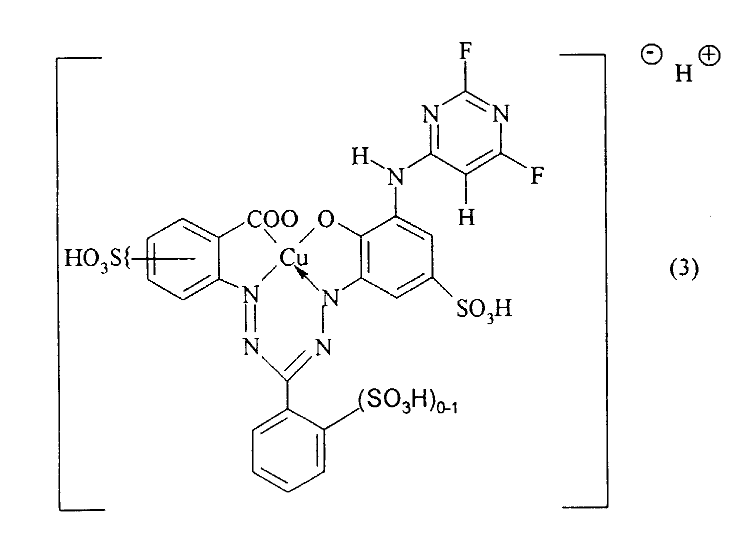

2. Colorants réactifs selon la revendication 1, caractérisés en ce qu'ils sont présents sous forme de sel de sodium, de potassium ou de lithium.

3. Procédé pour la préparation de colorants réactifs selon la revendication 1, caractérisé en ce que l'on fait réagir un composé de la formule suivante : 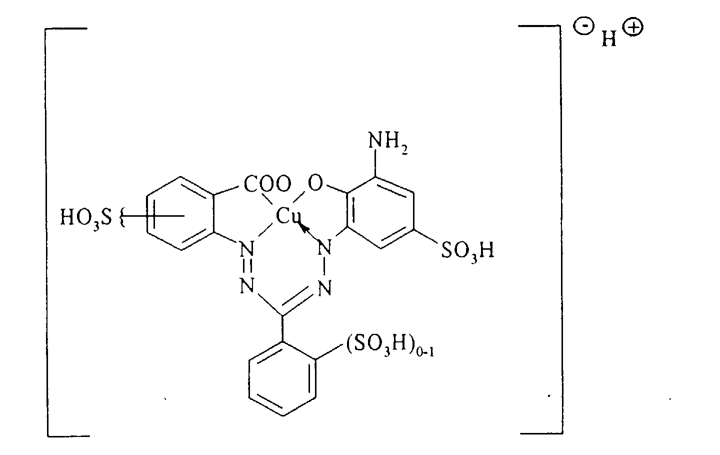 avec de la 2,4,6-trifluoropyrimidine de formule suivante 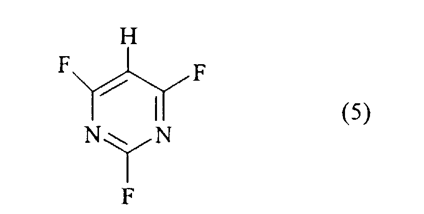 en solution ou en suspension.

4. Procédé pour la teinture ou l'impression de matériaux avec un colorant réactif, caractérisé en ce que l'on utilise un colorant selon la revendication 1.
